# EUROPÄISCHE PATENTSCHRIFT

(11) **EP 3 000 519 B1**
(45) Veröffentlichungstag und Bekanntmachung des Hinweises auf die Patenterteilung: **10.04.2019**
(21) Anmeldenummer: 15002504.7
(22) Anmeldetag: 24.08.2015
(51) Int. Cl.: B01D 46/00

(54) **FILTER**
FILTER
FILTRE

(30) Priorität: 15.09.2014 AT 506462014
(43) Veröffentlichungstag der Anmeldung: 30.03.2016
(73) Patentinhaber: Innio Jenbacher GmbH & Co OG, 6200 Jenbach (AT)
(72) Erfinder: Wall, Günther, 6323 Bad Häring (AT)
(74) Vertreter: Torggler & Hofinger Patentanwälte

(56) Entgegenhaltungen:
- EP-A1- 2 700 438
- DE-A1- 2 645 634
- DE-A1-102013 111 149
- US-A- 4 160 684
- US-A1- 2007 175 191

## Beschreibung

Die Erfindung betrifft einen Filter zum Abscheiden von flüssigen Schwebeteilchen aus einem Gas, mit den Merkmalen des Oberbegriffs von Anspruch 1 sowie eine Brennkraftmaschine mit den Merkmalen des Oberbegriffs von Anspruch 9.

Beim Betrieb einer Brennkraftmaschine entstehen bekannterweise sogenannte Blow-By-Gase, die aus einem Kurbelgehäuse der Brennkraftmaschine abzuführen sind, um ein Ansteigen des Drucks im Kurbelgehäuse zu vermeiden. In geschlossenen Kurbelgehäuse-Entlüftungssystemen wird dieses Kurbelgehäuse-Entlüftungsgas zu einem Lufteinlass der Brennkraftmaschine zurückgeführt. Das Trägergas enthält feine Öltröpfchen und Feststoffpartikel in der Größenordnung von etwa 0,1 µm bis 10 µm.

Um negative Auswirkungen dieses im Blow-By-Gas enthaltenen Öls auf Komponenten im Lufteinlass der Brennkraftmaschine zu vermeiden, ist es bekannt, Öl und Feststoffpartikel aus dem Trägergas abzuscheiden.

Zu diesem Zweck kommen unter anderem Filter gemäß dem Oberbegriff von Anspruch 1 zum Einsatz. Zur Erzielung hoher Abscheidegrade in diesem Partikelgrößenbereich kommen häufig Filtermedien zur Feinabscheidung zum Einsatz. Insbesondere kommen Filtermedien zum Einsatz, die auf dem Prinzip der Tiefenfiltration und der Koaleszenz beruhen. Dabei strömt das zu reinigende Gas durch das Filtermedium und die Partikel werden durch mechanische Effekte in 3-dimensional gewundenen Strömungspfad des Filtermediums zurückgehalten. Das Prinzip der Koaleszenzfilter besteht darin, die feinen Öltröpfchen an geeigneten Oberflächen in Kontakt zu bringen, sodass sich diese zu größeren Einheiten vereinigen und über Schwerkraft und Gasströmung abfließen können.

In gattungsgemäßen Filtern sind üblicherweise Abschnitte mit Filtermedien zur Grobabscheidung von Abschnitten mit Filtermedien zur Feinabscheidung gefolgt angeordnet.

Die Filtermedien zur Feinabscheidung sind üblicherweise durch einen geringen Faserdurchmesser und kleine Porendurchmesser charakterisiert. Abgeschiedene Flüssigkeit wird abhängig von einer Reihe von Filtermedieneigenschaften und Flüssigkeitseigenschaften sowie den vorherrschenden Grenzflächenkräften bei den üblichen Betriebsbedingungen häufig nicht ausreichend aus dem Filtermedium abgeführt, wodurch das Filtermedium im Betrieb rasch zusetzt und der Filterdifferenzdruck ansteigt.

Aus dem Stand der Technik sind Vorschläge für Filter mit hohem Abscheidegrad bei Einhaltung eines geringen Gegendrucks bekannt.

Die US 8,277,529 beschreibt z. B. einen Aufbau eines Filterelements, das wenigstens zwei Schichten eines Filtermediums aus Vlies, wobei die Filtersubstrate verschiedene Fraktionen von Fasern unterschiedlichen Durchmessers enthalten und die Filtermedien verschiedene Porengrößen aufweisen. Die US 8,360,251 beschreibt ein Filtermedium zur Koaleszenz-Filtration, wobei das Filtermedium wenigstens drei angrenzende Schichten aufweist, die in Serie angeordnet sind und hinsichtlich ihrer Porosität so konfiguriert sind, dass das Substrat mit der größten Porosität in der Mittelschicht zu liegen kommt.

Die US 8,021,455 beschreibt ein Filterelement aus wenigstens zwei Schichten eines Filtermediums aus Vlies, wobei ein erstes Filtermedium verschiedene Faserfraktionen unterschiedlicher Faserdurchmesser aufweist, und ein zweites Filtermedium vorgesehen ist, das aus lediglich einer Faserfraktion besteht.

Die US 4, 759,782 beschreibt einen Koaleszenz-Filter, bestehend aus drei Schichten, wobei die erste Schicht eine erste Porengröße besitzt und eine Faserfraktion eines ersten Durchmessers besitzt, die zweite Schicht - stromaufwärts der ersten Schicht - einen größeren Porendurchmesser als die erste Schicht aufweist und eine dritte Schicht, die stromabwärts angeordnet ist, die eine Porengröße größer als die Mittelschicht aufweist, wobei die Oberflächenenergien jeder Schicht größer als die Oberflächenspannung von Wasser ist.

Die DE102012217019 (A1) zeigt einen Filter, dessen Aufbau ein rasches Zusetzen des Filters verhindern soll. Der Filter dieser Schrift weist eine Schicht mit hoher Dichte und eine Schicht mit niedriger Dichte auf, welche miteinander laminiert sind. Die Schicht mit hoher Dichte ist an einer stromaufwärtigen Seite in einer Fließrichtung des Gases angeordnet und durch Fasern zum Sammeln von Öl oder Wasser gebildet. Die Schicht mit niedriger Dichte ist an einer stromabwärtigen Seite angeordnet und durch Fasern zum Dränieren von durch die Schicht mit hoher Dichte gesammeltem Öl oder Wasser gebildet. Die Fasern der Schicht mit hoher Dichte weisen jeweils eine Faserform auf, die zum Sammeln von Öl oder Wasser konfiguriert ist. Die Fasern der Schicht mit niedriger Dichte weisen jeweils eine Faserform auf, die zum Dränieren von Öl oder Wasser konfiguriert ist.

Die US 2007/175191 A1 lehrt einen Koaleszenz-Filter zum Abscheiden von Flüssigkeiten aus einem Gas. Das Gas tritt an einen Vorfilter heran und gelangt danach zu einem Feinfiltermedium, welches mehrlagig ausgeführt sein kann. Zwischen dem Vorfilter und dem Feinfilter ist eine Drainageschicht vorgesehen.

Aufgabe der vorliegenden Erfindung ist es, den Transport und die Drainage von zurückgehaltener Flüssigkeit eines Filters gegenüber dem Stand der Technik zu verbessern.

Gelöst wird diese Aufgabe durch einen Filter mit den Merkmalen von Anspruch 1.

Vorteilhafte Ausführungsformen sind in den abhängigen Ansprüchen angegeben.

Dadurch, dass innerhalb des Filterabschnittes zur Feinabscheidung wenigstens eine Drainageschicht angeordnet ist, wird erreicht, dass Transport und Drainage der aufgefangenen Flüssigkeit im Filter erleichtert sowie der Filter hinsichtlich Gegendruck und Abscheidewirkung verbessert wird.
Durch die erfindungsgemäße Anordnung wird erreicht, dass die abgeschieden Flüssigkeit aus der Schicht zur Feinabscheidung abgeleitet wird und somit von abgeschiedener Flüssigkeit entlastet wird, und so dem zu reinigenden Gas einen geringeren Strömungswiderstand entgegensetzt.

Bevorzugt kann vorgesehen sein, dass weitere Drainageschichten stromaufwärts und / oder stromabwärts der Schicht zur Feinabscheidung angeordnet sind.

Gemäß einer weiteren bevorzugten Variante ist vorgesehen, dass zwischen dem wenigstens einen Filterabschnitt zur Grobabscheidung und dem wenigstens einen Filterabschnitt zur Feinabscheidung wenigstens eine weitere Drainageschicht und / oder ein Abstand vorgesehen ist.

Alternativ oder zusätzlich zur Drainageschicht kann also auch ein Abstand zwischen Filterabschnitten zur Grobabscheidung und Filterabschnitten zur Feinabscheidung eingezogen sein. Ein Abstand kann im Filteraufbau zum Beispiel dadurch realisiert werden, dass beim Wickeln der Filterlagen ein Abstandshalter, etwa eine wenig kompressible Lage aus Gestrick mitgewickelt wird.

Bevorzugt kann vorgesehen sein, dass der Filterabschnitt zur Feinabscheidung aus einer Abfolge von Schichten zur Feinabscheidung und Schichten zur Feindrainage besteht.

Ebenfalls bevorzugt kann vorgesehen sein, dass der Filterabschnitt zur Feinabscheidung aus unterschiedlichen Schichten zur Feinabscheidung besteht, wobei die mittlere Porengröße der ersten Schicht zur Feinabscheidung eine größere mittlere Porengröße aufweist als die zweite Schicht zur Feinabscheidung.

Bevorzugt kann vorgesehen sein, dass der Faserdurchmesser der Schichten zur Feinabscheidung kleiner 10µm, vorzugsweise kleiner 5 µm beträgt. Darunter ist zu verstehen, dass die Filtermedien, aus welchen die unterschiedlichen Schichten zur Feinabscheidung bestehen, einen mittleren Faserdurchmesser von kleiner als 5 µm aufweisen. Die Filtermedien bestehen typischerweise aus einem Gewebe, Gestrick oder Gewirk aus Fasern.

Bevorzugt kann vorgesehen sein, dass die Schichten zur Feinabscheidung flüssigkeitsabweisende Oberflächeneigenschaften aufweisen. Flüssigkeitsabweisend bedeutet, dass sich das Material nicht oder kaum von Flüssigkeit benetzen lässt. Die flüssigkeitsabweisende Oberflächeneigenschaft kann entweder inhärent (also dem Grundwerkstoff eigen) vorliegen oder durch eine entsprechende Ausrüstung gewährleistet sein.

Bevorzugt kann vorgesehen sein, dass die Drainageschichten eine Kapillarwirkung gegenüber der Flüssigkeit aufweisen. Die Auswahl des Drainagematerials erfolgt in Abhängigkeit der Materialstruktur und der Grenzflächenspannung der Flüssigkeit gegenüber dem Filtermedium. Die Steighöhe zur Charakterisierung der Kapillarwirkung kann einfach experimentell bestimmt werden. Bevorzugt ist das Material so ausgebildet, dass eine Steighöhe der Flüssigkeit in der Drainageschicht von 2 bis 10 cm, vorzugsweise 5 bis 10 cm erreicht wird.

Bevorzugt ist vorgesehen, dass eine mittlere Porengröße des Filtermaterials der Drainageschichten so viel kleiner als die mittlere Faserlänge von Fasern des Filtermaterials der Abscheideschichten ist und die Drainageschichten an ihren Enden flächig mit Endbegrenzungen des Filters verbunden, vorzugsweise verklebt, sind, dass im Wesentlichen keine Fasern der in Strömungsrichtung vorgeschalteten Filtermedien mit der Flüssigkeit aus dem Filter ausgetragen werden und ein Wiedereintrag von Flüssigkeitstropfen in den Gasstrom im Wesentlichen verhindert wird.

Die Erfindung kann am besten mit Bezug auf die folgende Beschreibung der bevorzugten Ausführungsformen zusammen mit den begleitenden Zeichnungen verstanden werden. Dabei zeigt:
- Fig. 1: eine Querschnittsansicht eines Filters,
- Fig. 2: eine Detailansicht eines Filters,
- Fig. 3: eine schematische Ansicht der Anordnung einer Filtereinrichtung an einer Verbrennungskraftmaschine.

Eingangs sei angemerkt, dass in den Figuren stets zwei Schichten desselben Filtermediums gezeigt sind. Dies ist nicht erforderlich. Es kann auch vorgesehen sein, dass jeweils nur eine Schicht eines jeweiligen Filtermediums vorhanden ist.

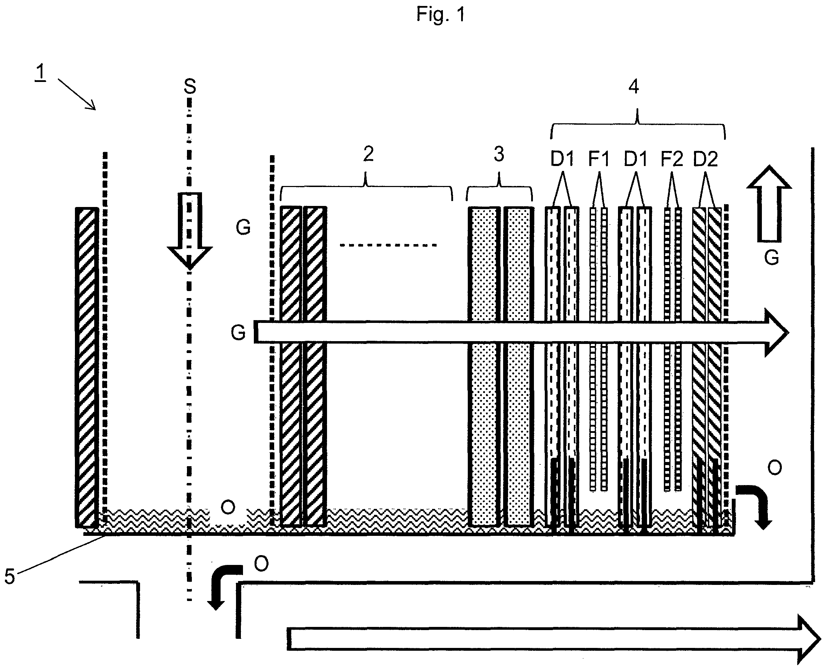

Der Filter 1 in Figur 1 ist im vorliegenden Ausführungsbeispiel zylindrisch und rotationssymmetrisch aufgebaut, es wird daher zur Beschreibung nur auf eine Hälfte des Querschnitts eingegangen. Der Filter 1 kann natürlich auch andere Formen aufweisen, beispielsweise quaderförmig sein.

Die Einströmung des flüssigkeitsbeladenen Gases G erfolgt in der Mitte des zylindrischen Aufbaus, die Mitte ist durch die Symmetrieachse S gekennzeichnet. Die Strömungsrichtung des Gases G ist durch weiße Pfeile angedeutet. Das mit Flüssigkeitstropfen beladene Gas G strömt zunächst durch Abschnitt 2 zur Grobabscheidung, welche aus einer oder mehreren Lagen eines Filtermediums zur Grobabscheidung besteht. Gezeigt sind der Übersichtlichkeit halber lediglich zwei Lagen, die Punkte im Abschnitt 2 deuten an, dass noch weitere Lagen vorhanden sein können.

Zweck des Abschnittes 2 zur Grobabscheidung ist es, die vom Gas G mitgeführte Masse an Flüssigkeit zu reduzieren, bevor es in die nachfolgenden Filterschichten tritt. An den Abschnitt 2 zur Grobabscheidung folgt eine Schicht 3 zur Grobdrainage. Durch die Schicht zur Grobdrainage wird verhindert, dass bereits abgeschiedene Flüssigkeit in die nachfolgende Schicht ausgetragen wird. Alternativ oder zusätzlich kann ein Abstand zwischen Filterabschnitten zur Grobabscheidung und Filterabschnitten zur Feinabscheidung eingezogen sein.

In weiterer Folge tritt das Gas G durch eine Abfolge von Schichten von Filtermaterial D1 zur Feindrainage und Schichten von Filtermaterial F1, F2 zur Feinabscheidung. Die Schichten zur Feindrainage D1 nehmen abgeschiedene Flüssigkeit O aus den Schichten zur Feinabscheidung F1, F2 auf und transportieren diese über Schwerkraft zum Flüssigkeitsabfluss am Boden des Filters 1. Der Abfluss der Flüssigkeit O ist durch schwarze Pfeile angedeutet. Der Filter 1 enthält Endbegrenzungen 5. In der Figur 1 ist lediglich die untere Endbegrenzung 5, also der Boden gezeigt. In der Regel umfasst der Filter 1 auch eine obere Endbegrenzung 5, sprich einen Deckel. Wenigstens die Drainageschichten des Filters 1 sind an ihren Enden flächig mit Endbegrenzungen 5 des Filters 1 verbunden, vorzugsweise verklebt.

Stromabwärts, also in dieser Figur rechts dargestellt, wird der Filter 1 von einer Schicht von Filtermaterial D2 zur Drainage und Einhausung begrenzt. Diese Schicht drainiert Flüssigkeit O vom letzten, also stromabwärts außen gelegenen Bereich der Schicht zur Feinabscheidung. Die Schicht von Filtermaterial D2 zur Drainage und Einhausung verringert das Flüssigkeitsvolumen in der letzten Schicht von Filtermaterial F2 zur Feinabscheidung und die Strömungsgeschwindigkeit des Gases G, um so einen Wieder-Eintrag von Flüssigkeit in das Gas G zu verhindern. Weiters fasst die Schicht D2 zur Drainage und Einhausung die Schicht F2 zur Feinabscheidung so ein, dass keine Fasern der vorgeschalteten Medien mit der abgeschiedenen Flüssigkeit ausgetragen werden können.

Die Anzahl der Lagen D1, D2, F1 und F2 in jedem Abschnitt beträgt wenigstens 1. Als Kombinationen der Abschnitte kann vorgesehen sein, dass D1- und F1-Abschnitte alternierend wiederholt werden, wobei jeweils mit einer Schicht D1 stromabwärts geendet wird. Damit ergibt sich eine Abfolge von (D1+F1)ₙ + D1 mit *n* als Anzahl der Wiederholungen der Kombination (D1 +F1), mit *n* ≥ 1.

Die Kombination der Abschnitte gebildet aus D1, D2 und F1, F2 kann durch eine oder mehrere Wiederholungen der Anordnung (D1 + F1)ₙ + (D1 + F2)ₘ + D2 gebildet sein, mit m als Anzahl der Wiederholungen der Kombination (D1+F2), mit m ≥ 1.

Als geeignete Filtermedien kommen in Betracht:
- Für die Schichten F1 und F2: beispielsweise Glasfasermaterial mit einem mittleren Faserdurchmesser kleiner 5 µm
- D1 und D2: beispielsweise Polyester, Polyolefin oder Glasfasermaterial mit einem Faserdurchmesser von größer 10 µm und Porositäten von größer 90 %
- Der Porendurchmesser der Schicht F1 liegt beispielsweise bei 100 bis 30 µm und ist größer als der Porendurchmesser der Schicht F2 mit beispielsweise 50 bis 10 µm
- Die Schichten F1 und F2 zur Feinabscheidung sind flüssigkeitsabweisend oder haben eine flüssigkeitsabweisende Oberflächenbehandlung
- Die Drainagematerialien D1 und D2 haben eine Kapillarwirkung, die mindestens zu einer Steighöhe der Flüssigkeit von 20 bis 50mm führt

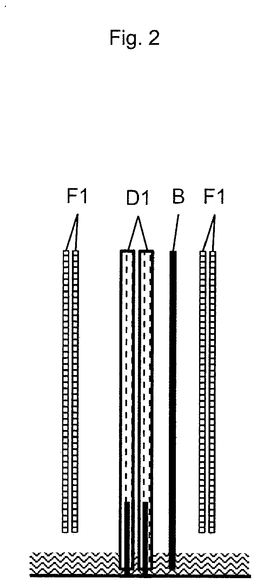

Das Ausführungsbeispiel der Figur 2 ist nicht Teil der vorliegenden Erfindung. Figur 2 zeigt einen Ausschnitt des Filterabschnittes 4 zur Feinabscheidung, wobei in diesem Ausführungsbeispiel eine Barriereschicht B nach, also stromabwärts, jeder Drainageschicht D1 eingezogen ist. Diese Barriereschicht B soll verhindern, dass Flüssigkeit von Drainageschichten zu den nachfolgenden Filterschichten weiter getragen wird. Das Medium der Barriereschicht kann entweder ein flüssigkeitsabweisendes Material bzw. ein flüssigkeitsabweisend beschichtetes Material oder ein Freiraum zwischen den Schichten sein. Als Abfolge ergibt sich in diesem Fall also F1 + D1 + B + F1.

Für alle Darstellungen gilt, dass der Übersichtlichkeit halber Abstände zwischen den einzelnen Filterlagen gezeigt sind. In der Praxis sind die Filterlagen dicht gepackt oder gewickelt. Auch sind in den Figuren jeweils zwei Lagen des jeweiligen Filtermaterials gezeigt. Die tatsächliche Anzahl von Lagen kann in der Praxis variieren.

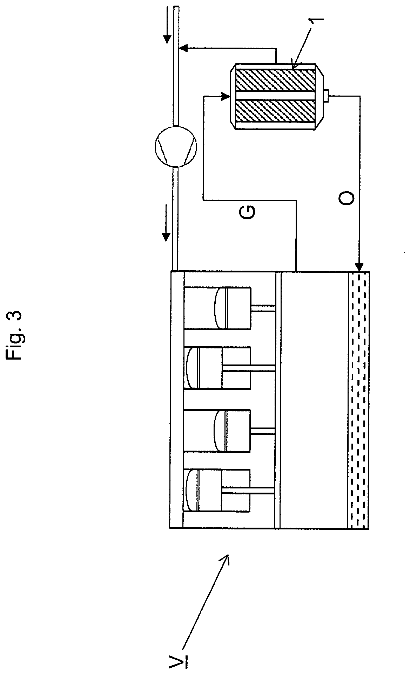

Figur 3 zeigt eine Brennkraftmaschine V mit einem Filter 1. In diesem Fall wird der Filter 1 als Filter zur Ölabscheidung in der Kurbelgehäuseentlüftung eingesetzt (Blow-By-Filter).

### Liste der verwendeten Bezugszeichen:

- 1: Filter
- 2: Filterabschnitt zur Grobabscheidung
- 3: Schicht zur Grobdrainage
- 4: Filterabschnitt zur Feinabscheidung
- 5: Endbegrenzung
- D1: Filtermaterial zur Feindrainage
- F1: Erstes Filtermaterial zur Feinabscheidung
- F2: Zweites Filtermaterial zur Feinabscheidung
- D2: Filtermaterial zur Drainage und Einhausung
- B: Barriereschicht
- G: Gas
- O: Flüssigkeit
- S: Symmetrieachse
- V: Brennkraftmaschine

## Patentansprüche

1. Filter (1) zum Abscheiden von flüssigen Schwebeteilchen aus einem Gas, umfassend:
- wenigstens einen Filterabschnitt (2) zur Grobabscheidung
- wenigstens einen Filterabschnitt (4) zur Feinabscheidung wobei innerhalb des Filterabschnittes (4) zur Feinabscheidung wenigstens eine Drainageschicht (D1) angeordnet ist, **dadurch gekennzeichnet, dass** der Filterabschnitt (4) zur Feinabscheidung aus einer Abfolge von einer Schicht oder Schichten zur Feinabscheidung (F1, F2) und Schichten zur Feindrainage (D1, D2) besteht und dass die einzelnen Filterabschnitte vom Gas nacheinander durchströmbar sind, wobei die Abfolge der Schicht oder Schichten zur Feinabscheidung (F1, F2) und der Schichten zur Feindrainage (D1, D2):
- (D1+F1)ₙ + D1 lautet, mit n als Anzahl der Wiederholungen der Kombination (D1+F1), mit n ≥1, oder
- (D1 + F1)ₙ + (D1 + F2)ₘ + D2 lautet, mit m als Anzahl der Wiederholungen der Kombination (D1+F2) und n als Anzahl der Wiederholungen der Kombination (D1+F1), mit m ≥ 1 und n ≥1,
wobei jede der Schichten (F1, F2, D1, D2) aus einer oder mehreren Lagen eines Filtermaterials zur Feinabscheidung bzw. Feindrainage besteht.

2. Filter (1) nach Anspruch 1, **dadurch gekennzeichnet, dass** zwischen dem wenigstens einen Filterabschnitt (2) zur Grobabscheidung und dem wenigstens einen Filterabschnitt (4) zur Feinabscheidung wenigstens eine weitere Drainageschicht (3) und / oder ein Abstand vorgesehen ist.

3. Filter (1) nach einem der vorangegangenen Ansprüche, **dadurch gekennzeichnet, dass** der Filterabschnitt (4) zur Feinabscheidung aus unterschiedlichen Schichten (F1, F2) zur Feinabscheidung besteht, wobei die mittlere Porengröße der ersten Schicht (F1) zur Feinabscheidung eine größere mittlere Porengröße aufweist als die zweite Schicht (F2) zur Feinabscheidung.

4. Filter (1) nach einem der vorangegangenen Ansprüche, **dadurch gekennzeichnet, dass** der Faserdurchmesser der Schichten (F1, F2) zur Feinabscheidung kleiner 10 µm, vorzugsweise kleiner 5 µm beträgt.

5. Filter (1) nach einem der vorangegangenen Ansprüche, **dadurch gekennzeichnet, dass** die Schichten (F1, F2) zur Feinabscheidung flüssigkeitsabweisende Oberflächeneigenschaften bzw. eine flüssigkeitsabweisende Oberflächenbeschichtung aufweisen.

6. Filter (1) nach einem der vorangegangenen Ansprüche, **dadurch gekennzeichnet, dass** die Drainageschichten (D1, D2) eine Kapillarwirkung gegenüber der Flüssigkeit (O) aufweisen solchermaßen, sodass eine Steighöhe der Flüssigkeit in der Drainageschicht von 2 bis 10 cm, vorzugsweise 5 bis 10 cm erreicht wird.

7. Filter (1) nach einem der vorangegangenen Ansprüche, **dadurch gekennzeichnet, dass** eine mittlere Porengröße des Filtermaterials der Drainageschichten (D1, D2) so viel kleiner als die mittlere Faserlänge von Fasern des Filtermaterials der Abscheideschichten (2, 4, F1, F2) ist und die Drainageschichten an ihren Enden flächig mit Endbegrenzungen (5) des Filters (1) verbunden, vorzugsweise verklebt, sind, dass im Wesentlichen keine Fasern der in Strömungsrichtung vorgeschalteten Filtermedien mit der Flüssigkeit aus dem Filter ausgetragen werden und ein Wiedereintrag von Flüssigkeitstropfen in den Gasstrom im Wesentlichen verhindert wird.

8. Filter (1) nach einem der vorangegangenen Ansprüche, **dadurch gekennzeichnet, dass** die abgeschiedene Flüssigkeit Öl ist.

9. Brennkraftmaschine (V) mit einem Filter (1) nach einem der vorangegangenen Ansprüche.

## Claims

1. A filter (1) for separating liquid suspended particles from a gas including:
- at least one filter portion (2) for coarse separation, and
- at least one filter portion (4) for fine separation,
wherein at least one drainage layer (D1) is arranged within the filter portion (4) for fine separation, **characterised in that** the filter portion (4) for fine separation comprises a sequence of a layer or layers for fine separation (F1, F2) and layers for fine drainage (D1, D2) and wherein the filter portion can be passed by the gas successively, wherein the sequence of a layer or layers for fine separation (F1, F2) and layers for fine drainage (D1, D2) reads as:
- (D1 + F1)ₙ + D1, with n the numbers of repetitions of the combination (D1+F1), and with n ≥ 1, or
- (D1 + F1)ₙ + (D1 + F2)ₘ + D2, with m the number of repetitions of the combination (D1+F2), and with n the number of repetitions of the combination (D1+F1), with m ≥ 1 and n ≥ 1,
wherein each of the layers (F1, F2, D1, D2) comprises one or more layer portions of a filter material for fine separation and fine drainage respectively.

2. A filter (1) as set forth in claim 1 **characterised in that** at least one further drainage layer (3) and/or spacing is provided between the at least one filter portion (2) for coarse separation and the at least one filter portion (4) for fine separation.

3. A filter (1) as set forth in one of the preceding claims **characterised in that** the filter portion (4) for fine separation comprises different layers (F1, F2) for fine separation, wherein the mean pore size of the first layer (F1) for fine separation is of a larger mean pore size than the second layer (F2) for fine separation.

4. A filter (1) as set forth in one of the preceding claims **characterised in that** the fiber diameter of the layers (F1, F2) for fine separation is less than 10 µm, preferably less than 5 µm.

5. A filter (1) as set forth in one of the preceding claims **characterised in that** the layers (F1, F2) for fine separation have liquid-repellent surface properties or a liquid-repellent surface coating.

6. A filter (1) as set forth in one of the preceding claims **characterised in that** the drainage layers (D1, D2) have a capillary action in relation to the liquid (O) such that a rise height of the liquid in the drainage layer of between 2 and 10 cm, preferably between 5 and 10 cm, is reached.

7. A filter (1) as set forth in one of the preceding claims **characterised in that** a mean pore size of the filter material of the drainage layers (D1, D2) is so much smaller than the mean fiber length of fibers of the filter material of the separation layers (2, 4, F1, F2) and the drainage layers are joined, preferably glued, at their ends in surface contact with end boundaries (5) of the filter (1), that substantially no fibers of the filter media which are disposed upstream in the flow direction are discharged from the filter with the liquid and return of liquid drops into the gas flow is substantially prevented.

8. A filter (1) according to one of the preceding claims **characterised in that** the separated liquid is oil.

9. An internal combustion engine (V) having a filter (1) as set forth in one of the preceding claims.

## Revendications

1. Filtre (1) pour extraire d'un gaz des particules en suspension liquides, comprenant:
- au moins une section formant filtre (2) pour une extraction grossière
- au moins une section formant filtre (4) pour une extraction fine
dans lequel au moins une couche de drainage (D1) est disposée à l'intérieur de la section formant filtre (4) pour l'extraction fine, **caractérisé en ce que** la section formant filtre (4) pour l'extraction fine se compose d'une suite d'une couche ou de plusieurs couches pour l'extraction fine (F1, F2) et de couches pour le drainage fin (D1, D2) et **en ce que** les différentes sections formant filtre peuvent être parcourues l'une après l'autre par le gaz, dans lequel la suite de la couche ou des couches pour l'extraction fine (F1, F2) et des couches pour le drainage fin (D1, D2):
- est (D1 + F1)ₙ + D1, avec n comme nombre de répétitions de la combinaison (D1+F1), avec n ≥ 1, ou
- est (D1 + F1)ₙ + (D1 + F2)ₘ + D2, avec m comme nombre de répétitions de la combinaison (D1+F2) et n comme nombre de répétitions de la combinaison (D1+F1), avec m ≥ 1 et n ≥ 1,
dans lequel chacune des couches (F1, F2, D1, D2) se compose d'une ou de plusieurs strates d'un matériau filtrant pour l'extraction fine ou le drainage fin.

2. Filtre (1) selon la revendication 1, **caractérisé en ce qu'**entre la au moins une section formant filtre (2) pour l'extraction grossière et la au moins une section formant filtre (4) pour l'extraction fine est prévue au moins une autre couche de drainage (3) et / ou un écartement.

3. Filtre (1) selon l'une des revendications précédentes, **caractérisé en ce que** la section formant filtre (4) pour l'extraction fine se compose de différentes couches (F1, F2) pour l'extraction fine, dans lequel la grosseur moyenne des pores de la première couche (F1) pour l'extraction fine présente une grosseur moyenne des pores supérieure à la deuxième couche (F2) pour l'extraction fine.

4. Filtre (1) selon l'une des revendications précédentes, **caractérisé en ce que** le diamètre des fibres des couches (F1, F2) pour l'extraction fine s'élève à moins de 10 µm, de préférence moins de 5 µm.

5. Filtre (1) selon l'une des revendications précédentes, **caractérisé en ce que** les couches (F1, F2) pour l'extraction fine présentent des propriétés de surface hydrofuges ou une enduction de surface hydrofuge.

6. Filtre (1) selon l'une des revendications précédentes, **caractérisé en ce que** les couches de drainage (D1, D2) présentent un effet capillaire par rapport au liquide (O) de façon à ce qu'une ascension du liquide dans la couche de drainage de 2 à 10 cm, de préférence de 5 à 10 cm est atteinte.

7. Filtre (1) selon l'une des revendications précédentes, **caractérisé en ce qu'**une grosseur moyenne de pores du matériau filtrant des couches de drainage (D1, D2) est beaucoup plus petite que la longueur moyenne de fibre des fibres du matériau filtrant des couches d'extraction (2, 4, F1, F2) et les couches de drainage sont reliées, de préférence collées, à leurs extrémités de façon plane aux limites finales (5) du filtre (1), **en ce qu'**essentiellement aucune fibre des milieux filtrants en amont dans le sens d'écoulement n'est évacuée du filtre avec le liquide et une réadmission des gouttes de liquide dans le flux de gaz est essentiellement empêchée.

8. Filtre (1) selon l'une des revendications précédentes, **caractérisé en ce que** le liquide extrait est de l'huile.

9. Machine à combustion interne (V) avec un filtre (1) selon l'une des revendications précédentes.
